Europäisches Patentamt

European Patent Office

Office européen des brevets

(11) Veröffentlichungsnummer: **0 384 306**
**A1**

## (12) EUROPÄISCHE PATENTANMELDUNG

(21) Anmeldenummer: **90103001.5**

(22) Anmeldetag: **16.02.90**

(51) Int. Cl.⁵: **H02H 3/28**

(30) Priorität: **22.02.89 DE 3905335**

(43) Veröffentlichungstag der Anmeldung:
**29.08.90 Patentblatt 90/35**

(84) Benannte Vertragsstaaten:
**CH DE FR GB IT LI SE**

(71) Anmelder: **Licentia Patent-Verwaltungs-GmbH**
**Theodor-Stern-Kai 1**
**D-6000 Frankfurt/Main 70(DE)**

(72) Erfinder: **Meinhardt, Peter, Dr.-Ing.**
**Stockhausenstrasse 12a**
**D-6082 Mörfelden(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) **Verfahren und Vorrichtung zum Erzeugen von Auslösesignalen für Schalter bei Kurzschlüssen an Sammelschienen und/oder Sammelschienenabschnitten.**

(57) Gegenstand der Erfindung ist ein Verfahren zum Erzeugen von Auslösesignalen für Schalter bei Kurzschlusströmen an Sammelschienen und/oder Sammelschienenabschnitten. Die Summe zyklisch erfasster Augenblickswerte der Ströme der Zu-und Abgänge der Sammelschiene bzw. der Sammelschienen wird jeweils für mindestens eine Phase gebildet und mit einem Schwellenwert verglichen, dessen Höhe einem unerwünscht grossen Fehlerstrom entspricht. Der Zeitpunkt eines Fehlereintritts wird festgestellt. Bei einer Schwellenüberschreitung unmittelbar nach dem Zeitpunkt des Fehlereintritts wird ein Aus-Kommando für mindestens einen Leistungsschalter erzeugt.

FIG.1

EP 0 384 306 A1

Die Erfindung bezieht sich auf ein Verfahren zum Erzeugen von Auslösesignalen für Schalter bei Kurzschlussströmen an Sammelschienen und/oder Sammelschienenabschnitten.

Sammelschienen und deren Abzweige werden beim Auftreten unzulässig hoher Kurzschlussströme aufgrund von Fehlern innerhalb der Sammelschienenanlage durch Betätigung von Leistungsschaltern geschützt, die den jeweils betroffenen Sammelschienenabschnitt oder Abzweig von der Energiequelle abtrennen. Eine Möglichkeit, unzulässige Kurzschlussströme zu erkennen, ist die Phasenvergleichs-Methode. Bei dieser Methode werden die Phasenlagen aller einem Sammelschienenabschnitt zugeordneten Abgangsströme pro Phase festgestellt und mit vorgegebenen Grenzen verglichen Die Phasenlagen können durch Detektieren der Strommulldurchgänge ermittelt werden. Durch Vergleich der relativen zeitlichen Lage der Strommulldurchgänge mit vorgegebenen Werten kann die Flussrichtung der Über- bzw. Kurzschlussströme erkannt werden. An Hand der Flussrichtung kann die Lage des jeweiligen Fehlers vor oder nach den Stromwandlern, mit denen die Abzweigströme überwacht werden, festgelegt werden. Sind z.B. die Kurzschlussströme auf Anlagenfehler ausserhalb des durch die Einbauorte der Stromwandler abgegrenzten Schutzbereichs zurückzuführen, dann ist es die Aufgabe der aussenliegenden Schutzeinrichtungen, den Fehler abzuschalten. Liegen die Fehler innerhalb des durch die Stromwandler abgegrenzten Schutzbereichs, dann wird ein Aus-Kommando an die für den betroffenen Sammelschienenabschnitt zuständigen Leistungsschalter zum Freischalten des Abschnitts gegeben Der Phasenvergleich ist sehr sicher, d.h. er neigt, auch bei Stromwandlersättigung, nicht zu Fehlauslösungen bei aussenliegenden Fehlern, was für einen Sammelschienenschutz wichtig ist, da das Betriebsmittel Sammelschiene als Versorgungsknoten nicht grundlos ausser Betrieb gehen darf. Andererseits können bei starker Sättigung eines bzw. einiger der stromführenden Stromwandler bei einem inneren Fehler deutliche Kommandozeitverlängerungen entstehen, welche erhöhte indirekte und direkte Schäden durch den Anlagenfehler zur Folge haben können.

Hier setzt die Erfindung ein, der die Aufgabe zugrunde liegt, ein Verfahren und eine Vorrichtung der eingangs beschriebenen Gattung derart weiterzuentwickeln, dass unerwünscht hohe Ströme, z.B. Kurzschlussströme, in kürzerer Zeit erkannt werden, um das Aus-Kommando für Leistungsschalter schneller zur Verfügung zu stellen.

Die Aufgabe wird erfindungsgemäss dadurch gelöst, dass die Summe der Ströme der Zu- und Abgänge (= Abzweige) der Sammelschiene bzw. des Sammelschienenabschnitts jeweils für mindestens eine Phase gebildet und mit einem Schwellenwert verglichen wird, dessen Höhe einem unerwünscht grossen Strom entspricht, dass der Zeitpunkt eines Fehlereintritts festgestellt wird und dass bei einer Schwellwertüberschreitung unmittelbar nach dem Zeitpunkt des Fehlereintritts ein Aus-Kommando für Leistungsschalter erzeugt wird. Bei Drehstrom werden insbesondere die Ströme aller Phasen auf die vorstehend beschriebene Weise überwacht und verarbeitet. Mit dem vorstehend beschriebenen Verfahren wird nicht die Phasenlage, sondern die Summe der Augenblickswerte (Stromsumme) überwacht. Da eine Stromsumme auch durch eine Stromwandlersättigung bei aussenliegenden Fehlern entsteht, wird ein weiteres Kriterium hinzugenommen, nämlich der Zeitverzug zwischen physikalischem Fehlereintritt und erkannter Stroms summe. Wandlersättigung, und damit eine Stromsumme bei aussenliegenden Fehlern, tritt erst nach einigen ms nach Fehlereintritt auf, eine Stromsumme durch einen innenliegenden Fehler wird dagegen sofort nach Fehlereintritt erkennbar. Dies wird ausgewertet. Das Verfahren arbeitet nach dem Schwellenwertkriterium nur, wenn die Stromsumme eine nennenswerte Amplitude aufweist (und daher Wandlersättigung möglich ist), deckt also genau die Fälle ab, welche dem Phasenvergleich Probleme bereiten. Es neigt wie der Phasenvergleich nicht zur Überfunktion und wird diesem daher zweckmässigerweise funktionell parallel geschaltet. So ergänzen sich beide Verfahren. Vorzugsweise wird der Fehlerzeitpunkt durch Feststellung der zeitlichen Änderung mindestens eines Stroms einer Phase und Vergleich mit mindestens einem Schwellenwert für die Änderung festgestellt. Aufgrund der den Schwellenwert übersteigenden Stromsumme muss sich mindestens ein Strom einer Phase eines Abzweigs deutlich ändern, so dass die Auswertung der zeitlichen Änderung des Stroms für die Erkennung des Zeitpunkts des Fehlereintritts geeignet ist.

Bei der zweckmässigen Ausführungsform wird die zeitliche Änderung mindestens eines Abzweigstroms durch Vergleich von zyklisch erfassten Momentanwerten des Stroms, die durch ein Vielfaches der Dauer einer halben Netzperiode, mindestens eine halbe Netzperiode, voneinander getrennt sind, festgestellt, da mit symmetrischen Strömen, die im wesentlichen aus der Netz-Grundschwingung bestehen, gerechnet werden kann.

Es können ein oder mehrere Abgangsströme für diese Fehlereintritts-Ermittlung herangezogen werden, sie sollten jedoch einen nennenswerten Strom führen.

Um Fehlinterpretierungen von transienten Stromänderungen ("Spikes") im interessierenden Zeitfenster vor Stromsummeneintritt zu verhindern, wird vorzugsweise als stabilisierendes Kriterium eingeführt, dass, wenn innerhalb eines vorgebbaren ersten Zeitfensters ein Stromsprung erkannt wurde, keiner innerhalb eines vorgebbaren zweiten Zeitfensters davor aufgetreten sein darf. Damit wird vermieden, dass eine Wandlersättigung, die nach der durch das erste Zeitfenster vorgegebenen Zeit eintritt, durch einen im Zeitfenster auftretenden "Spike" (Signalverfälschung o.ä ) zu einer Fehlinterpretation mit Fehlauslösung führt.

Das Zeitfenster zwischen Stromsummenerkennung und davorliegendem, in Auslöserichtung wirkenden Fehlereintritt wird zweckmässigerweise so klein gewählt, dass Stromwandler bei Kurzschlussströmen üblicherweise nicht innerhalb dieser Zeit bereits in Sättigung gehen.

Eine Vorrichtung zur Durchführung der oben beschriebenen Verfahren besteht darin, dass die Sekundärseiten von mit Abzweigphasenleitern verbundenen Stromwandlern jeweils über Abtast- und Halteschaltungen und Analog-Digital-Umsetzern mit einem Mikrorechner verbunden sind.

Die Erfindung wird im folgenden an Hand eines in einer Zeichnung dargestellten Ausführungsbeispiels näher beschrieben, aus dem sich weitere Einzelheiten, Merkmale und Vorteile ergeben

Es zeigen:

Fig. 1 ein Übersichtsschaltbild einer Anordnung zum Erzeugen von Auslösesignalen bei Kurzschlussströmen an Sammelschienen,

Fig. 2 a,b,c Zeitdiagramme der Ströme zweier Abgänge und des Summenstroms einer Phase bei einem innenliegenden Kurzschluss,

Fig. 3 a,b,c Zeitdiagramme der Ströme zweier Abgänge und des Summenstroms bei einem aussenliegenden Kurzschluss,

Fig. 4 a,b,c Zeitdiagramme eines Abgangsstroms einer Phase zeitlich versetzt sowie die Differenz der Stromwerte.

Fig. Ein Sammelschienenabschnitt 1 enthält Abzweigleiter 2, 3, 4, 15, 16, 17 mit Stromwandlern 5, 6, 7 und Stromwandlern 8, 9, 10. Die Sekundärseiten der Stromwandler 5, 6, 7, 8, 9, 10 sind mit Abtast- und Halteschaltungen 11 verbunden, denen Analog-Digitalwandler 12 nachgeschaltet sind, mit denen ein Mikrorechner 13 verbunden ist. In gleicher Weise werden die Stromwandler aller weiteren Zu- und Abgänge zu dem Sammelschienenabschnitt und dem Mikrorechner 13 verbunden. Die Ströme der Abzweigleiter werden durch Abtastung der Ströme der Stromwandler in äquidistanten Zeitintervallen von z.B. 1 Mikrosekunde gemessen. Die digitalisierten Abtastwerte gelangen in den Mikrorechner 13.

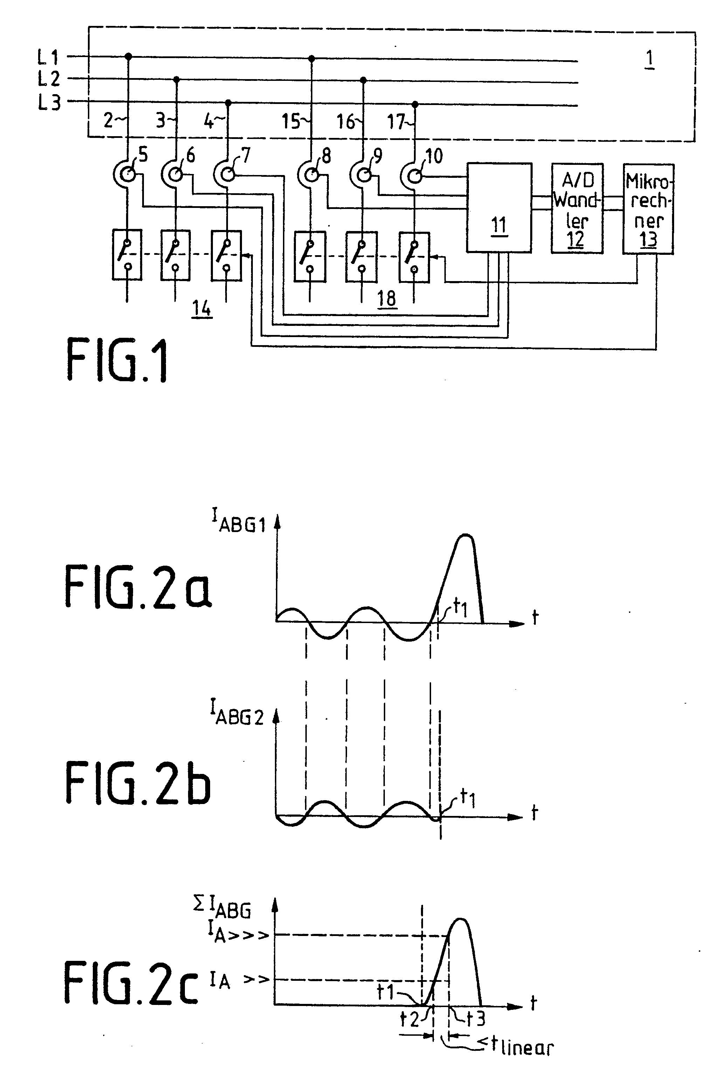

Der Mikrorechner 13 stellt Fehler innerhalb des durch die Stromwandler 5-10 usw. begrenzten Sammelschienenbereichs nach dem Phasenvergleichs-Verfahren fest. Es wird die Lage der Nulldurchgänge zueinander aller dem Sammelschienenabschnitt 1 zugeordneten Ausgangsströme pro Phase gemessen. An Hand der Phasenlage lässt sich für Kurzschlussströme die Flussrichtung ermitteln, aus der sich die Lage des Fehlers innerhalb oder ausserhalb der durch die Stromwandler begrenzten Bereichs ergibt Liegt der Fehler innerhalb des Bereichs, dann gibt der Mikrorechner 13 ein Aus-Kommando an die für den Sammelschienenabschnitt 1 zuständigen Leistungsschalter 14, 18 usw. Ausser dem Phasenvergleichsverfahren wird mit der in Fig. 1 dargestellten Anordnung noch das nachfolgend beschriebene Verfahren durchgeführt, mit dem das Vorliegen eines innerhalb der Stromwandler z.B. 5 + 8 aufgetretenen Fehlers in kürzerer Zeit festgestellt werden kann. Dieses Schnellauslöseverfahren ergänzt das Phasenvergleichsverfahren bei innenliegenden, stromstarken Fehlern mit oder ohne Wandlersättigung. Das mit dem Schnellauslöseverfahren erzeugte Aus-Kommando für die Leistungsschalter 14, 18 ist mit dem Aus-Kommando des Phasenvergleichsverfahrens ODER-verknüpft. Bei aussenliegenden Fehlern mit Wandlersättigung darf keine Überfunktion auftreten. Mit dem Verfahren wird die Verzugszeit zwischen Fehlereintritt und Auftreten einer Stromsumme festgestellt. Es wird ein Aus-Kommando für die Leistungsschalter erzeugt, wenn die Stromsumme unmittelbar nach Fehlereintritt deutlich ansteigt. Unter Stromsumme ist hierbei die Summe der Ströme aller Zu- und Abgänge des Sammelschienenabschnitts 1 jeweils einer Phase zu verstehen. Die in dem Sammelschienenabzweig 1 eingesetzten Stromwandler dürfen während einer Fensterzeit, z.B. während 3 msec., nach Fehlereintritt keine nennenswerte Sättigung zeigen.

1. Die Anregung für die Überprüfung auf Schnell-Aus erfolgt durch das Überschreiten eines Stromwerts $I_{A>>>}$, d.h. eines vorgegebenen Überstromwerts in der Stromsumme der jeweiligen Phase des jeweiligen Sammelschienenabschnitts 1 Sie weist z.B das Verhalten eines retriggerbaren Monoflops mit 25 ms Dauer und 10 % Schwellenhysterese auf.

2. Als Zeitpunkt des Eintritts möglicher Stromwandlersättigung wird der Augenblick des Überschreitens der Schwelle $I_{A>>}$ gewählt, der mit $I_{A>>} < I_{A>>>}$ vor dem Freigabekriterium 1 liegt. Die Schwellen werden z.B. so gewählt, dass $I_{A>>>} = 4 \cdot I_{A>>}$ ist.

3. Es wird geprüft, ob innerhalb der dem Zeitpunkt nach 2. vorangegangenen Fensterzeiteinear von z.B. 3 ms eine sprunghafte Änderung in einem ausgewählten Abgangsstrom aufgetreten ist (Indikator für Fehlerein trittszeitpunkt), während gleichzeitig in der Zeit von z.B. 20 bis z.B. 3 ms vor Zeitpunkt nach 2 keine sprunghafte Änderung aufgetreten ist.

3

Sind die Bedingungen 1 und 3 erfüllt, so wird auf Schnell-AUS erkannt. Sind nicht alle Bedingungen erfüllt, wird bzw. bleibt für die Dauer der Anregung der Phasenvergleich aktiv. Eine weitere Stabilisierung des beschriebenen Schnell-AUS-Algorithmus kann dadurch erreicht werden, dass die Bedingungen jeweils für um einen Abtastwert verschobene Fenster zweimal nacheinander erfüllt sein müssen.

Aus den Bedingungen ist zu erkennen, dass die Schnellauslösung nur ca. in den ersten 6 ms nach Fehlereintritt erfolgen kann und auch nur bei Überschreiten einer Mindest-Stromsumme (3,6-facher Einspeisestrom vor Fehlereintritt bei Formel $I_{A>>} = \Sigma |I|*0,4$). Folgefehler, die nach dem ersten Fehlereintritt, der nicht zu einem Schnell-AUS führte, auftreten, werden daher nicht mehr mit dem Schnellauslöse-Verfahren, sondern nur mit dem Phasenvergleichs-Algorithmus geprüft, es sei denn, die Anregebedingung ist zwischenzeitlich zurückgefallen.

Bei einem Wiedereinschaltzyklus einer Kurzunterbrechung kann die Schnellauslösung blockiert werden, um eine Fehlauslösung aufgrund von Wandlerremanenz zu vermeiden.

Zur Erkennung eines Abgangsstromsprungs wird folgende Methode verwendet:

Die oben erläuterte Bedingung 3 erfordert die Erkennung einer sprunghaften Änderung in einem ausgewählten Abgangsstrom. Da aufgrund fehlender Leistungsrichtungs- und externer Netzschaltungsinformation nicht festgestellt werden kann, ob ein stromführender Abgang eine Einspeisung oder Last ist, kann der Abgangsstrom im Falle eines Sammelschienenfehlers zusammenbrechen (Last) oder stark ansteigen (Einspeisung). Beide Zustände müssen erkannt werden. Dieses ist möglich durch Vergleich der Strom-Augenblickswerte mit denen vor z.B. einer Netzperiode. Es werden die Amplituden des Stroms I zyklisch abgetastet. Zugleich werden die restlichen Zu- bzw. Abgangsströme der Sammelschiene bzw des Sammelschienenabschnitts der gleichen Phase abgetastet Hieraus wird die Summe gebildet, die mit den Schwellenwerten $I_{A>>}$, $I_{A>>}$ verglichen wird (s.o.).

Die Erkennung einer sprunghaften Änderung eines Abgangsstromes geschieht nach folgender Beziehung:

a) Änderung, wenn: $|IABSA(t) - IABSA (t-1/f_n)|>DISA$, worin mit "IABSA" der Augenblickswert des ausgewählten Abgangsstroms, mit "DISA" die zulässige Toleranz ohne Erkennung auf "Änderung", mit t der Augenblickswert und mit $f_N$ die Netzfrequenz bezeichnet sind. Bei Signalen ohne Gleichstromglied und symmetrischer Gestalt (Normalfall) kann auch ein halb so grosses Fenster verwendet werden:

b) Änderung, wenn: $|IABSA(t) + IABSA(t-1/(2.f_N))|>DISA$ Auf Signalsprung wird erkannt, wenn Kriterien a) oder b) für zwei unmittelbar aufeinanderfolgende Abtastzeitpunkte erfüllt sind. Der Zeitpunkt des Signalsprungs ist der Zeitpunkt der erstmaligen Erfüllung des Änderungskriteriums.

Der Toleranzwert DISA ist so gewählt, dass leichte Signalschwankungen (z.B. Laststrom eines Lichtbogenschmelzofens) noch nicht zur Erkennung eines Stromsprungs führen, Änderungen aufgrund eines Fehlers jedoch innerhalb ca. 1 ms erkannt werden. Um eine, bezogen auf den Abgangsstrom vor Fehlereintritt, gleichbleibende relative Empfindlichkeit der Änderungserkennung zu erreichen, kann DISA dynamisch nachgeführt werden, z.B. in folgender Weise:

$$DISA = k \sum_{x=a}^{b} |IABSA(x)| \quad , \quad a=t-1/f_N - Abst, \quad b=t-Abst$$

das heisst, für ein eine Periode der Netzfrequenz umfassendes Intervall, was sicher vor einem möglichen Fehlereintritt liegt (Zeitspanne "Abst" vor Beobachtungszeitpunkt), wird der Mittelwert des Betriebsstroms als normierender Faktor für DISA verwendet. Weitere, über einen längeren Zeitraum integrierende Verfahren sind ebenfalls anwendbar

Wenn wegen der beschränkten Rechenkapazität der SammelschienenschutzProzessoren nicht alle Abgangsströme auf sprunghafte Änderungen überwacht werden können, ist eine Auswahl eines Abgangsstroms für die Erkennung eines Pegelsprungs zu treffen. Diese richtet sich danach, ob der gewählte Abgang einen nennenswerten Betriebsstrom führt, damit keine Fehlauslösung auftritt.

Es werden die Amplituden des Stroms I zyklisch abgetastet. Zugleich werden die restlichen Zu- bzw. Abgangsströme der Sammelschiene bzw. des Sammelschienenabschnitts der gleichen Phase abgetastet. Hieraus wird die Summe gebildet, die mit den Schwellenwerten $I_{A>>}$ $I_{A>>}$ verglichen wird (s.o.).

Die Amplituden der Abgangsströme werden zyklisch mit einem (z.B. abgangsweise paramentrierbaren) Schwellwert verglichen. Ist ein Abgangsstrom grösser als dieser Wert, so wird dieser Abgang ausgewählt. Wahlweise kann auch der Abgang mit der grössten Stromamplitude ausgewählt werden, sofern sie den Schwellwert übersteigt. Danach wird regelmässig geprüft, 0b der Abgangsstrom den Schwellwert unterschreitet. Ist dies der Fall, wird die zyklische Suche nach einem grösseren Abgangsstrom wieder aufgenommen. Die Übernahme des neu ausgewählten Abgangsstroms erfolgt gegebenenfalls nach Verstreichen des vorgegebenen Zeitfensters, damit die erforderlichen Vergleichswerte bereitgestellt werden können. Erfüllt keiner der Abgangsströme das Schwellwertkriterium, so wird der Schnellauslöse-Algorithmus bis zum nächsten Suchzyklus gesperrt.

In den Fig. 2a und 2b sind jeweils Abgangsströme $I_{ABG1}$ und $I_{ABG2}$ in Abhängigkeit von der Zeit t für einen eintretenden Sammelschienenfehler dargestellt. Die Fig. 2c zeigt die Summe der Ströme, nämlich $I_{ABG1}$ + $I_{ABG2}$, in Abhängigkeit von der Zeit t. Die Ströme $I_{ABG1}$ und $I_{ABG2}$ sind vor Fehlereintritt wegen der in Bezug auf den Sammelschienenabschnitt 1 unterschiedlichen Flussrichtung um 180° phasenverschoben. Bis zu einem Zeitpunkt $t_1$, an dem am Sammelschienenabschnitt ein Kurzschluss auftritt, ist die Stromsumme $I_{ABG1,2}$ null. Zum Zeitpunkt $t_1$ fliesst wegen des Kurzschlusses kein Strom in den Abgang, d.h. der Strom $I_{ABG2}$ wird null. Der zum Sammelschienenabschnitt fliessende Strom $I_{ABG1}$ steigt nach dem Zeitpunkt $t_1$ stark an und erreicht zum Zeitpunkt $t_3$ den Schwellenwert $I_{A> > >}$. Es wird dann sofort geprüft, wann die Stromsumme $I_{ABG1+2}$ zu einem davorliegenden Zeitpunkt $t_2$ den Schwellenwert $I_{A> >}$ überschritten hat. Der Zeitpunkt $t_2$ stimmt in etwa mit dem Zeitpunkt $t_1$ überein. Wegen der diskreten Abtastintervalle der Phase und dem Schwellwert $I_{A> >}>0$ können sich aber auch geringfügige Zeitabweichungen ergeben. Das Zeitkriterium $t_{linear}$ ist insbesonders auf etwas mehr als 3 msec. eingestellt. Bei dem in Fig. 2 dargestellten Stromverlauf ist $t_2 - t_1 < t_{linear}$ sodass die Kriterien für einen innenliegenden Kurzschluss erfüllt sind.

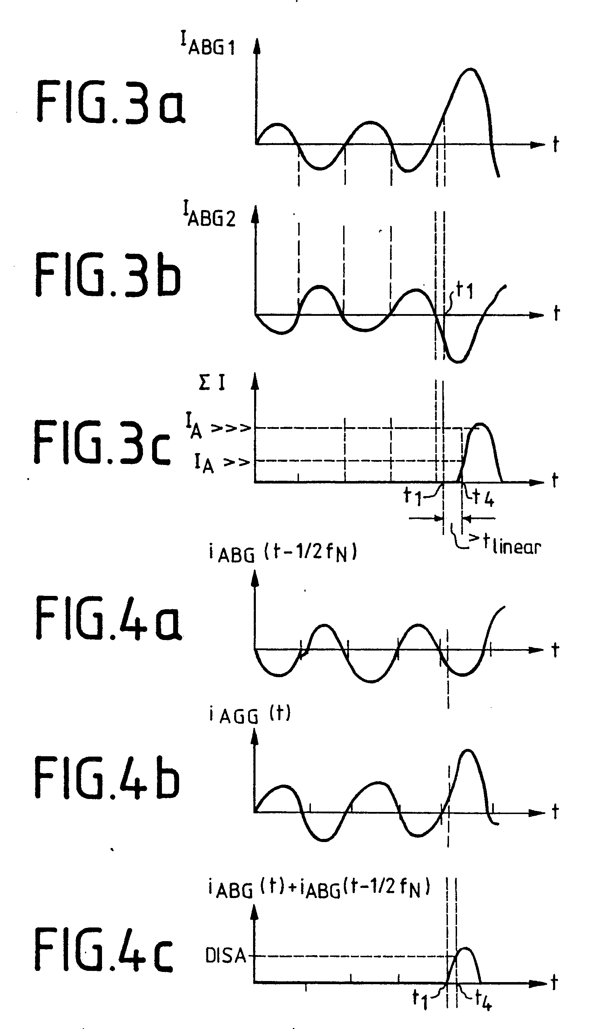

In Fig. 3a und b sind jeweils zwei Abgangsströme $I_{ABG2}$ in Abhängigkeit von der Zeit für einen aussenliegenden Kurzschluss dargestellt. Die Fig. 3c zeigt den Summenstrom in Abhängigkeit von der Zeit t. Zum Zeitpunkt $t_3$ sei ein aussenliegender Kurzschluss eingetreten. In der Stromsumme $\Sigma i$ wirkt sich dies erst aus, wenn eine Wandlersättigung eingetreten ist, die zum Zeitpunkt $t_4$ $I_{A> >}$, überschreitet. Da $t_4 - t_1 > t_{linear}$ ist, sind die Kriterien für einen innenliegenden Fehler nicht erfüllt.

Fig. 4 erläutert die Erkennung des Fehlereintritts-Zeitpunktes. In Fig. 4a ist ein Abzweigstrom $i_{ABG}$ ($t-1/2f_N$) in Abhängigkeit von der Zeit t dargestellt. Die Fig. 4a zeigt den gleichen Strom mit einer Phasenverschiebung von z.B. $- 1/2f_N$, 180°. Die Summe der beiden vorstehend beschriebenen Stromwerte ist vor Fehlereintritt null. Es ist angenommen, dass zum Zeitpunkt ts ein Kurzschluss eintritt. Zum Zeitpunkt $t_4$ übersteigt die Summe $j_{ABG}$ (t) + $j_{ABG}$ (t - $1/2f_N$) den Schwellenwert DISA. Diese Zeit $t_4$ wird damit als Zeitpunkt eines möglichen Fehlereintritts festgehalten.

Das Verfahren findet bei dreiphasigen Systemen für jede von mindestens zwei Phasen, vorzugsweise aber für jede der drei Phasen parallel Anwendung.


**Ansprüche**

1. Verfahren zum Erzeugen von Auslösesignalen für Schalter bei Überströmen und/oder Kurzschlussströmen an Sammelschienen und/oder Sammelschienenabschnitten, dadurch gekennzeichnet, dass die Summe zyklisch erfasster Augenblickswerte der Ströme der Zu- und Abgänge (= Abzweige) der Sammelschiene bzw. der Sammelschienen jeweils für mindestens einer Phase gebildet und mit einem Schwellenwert verglichen wird, dessen Höhe einem unerwünscht grossen Fehlerstrom entspricht, dass der Zeitpunkt eines Fehlereintritts festgestellt wird und dass bei einer Schwellenüberschreitung unmittelbar nach dem Zeitpunkt des Fehlereintritts ein Aus-Kommando für mindestens einen Leistungsschalter erzeugt wird

2. Verfahren nach Anspruch, dadurch gekennzeichnet, dass der Fehlerzeitpunkt durch Feststellung der zeitlichen Änderung mindestens eines Abzweigstroms einer Phase und Vergleich mit mindestens einem Schwellenwert für die Änderung festgestellt wird.

3. Verfahren nach Anspruch 1 oder 2, dadurch gekennzeichnet, dass die zeitliche Änderung mindestens eines Abzweig-Stroms einer Phase durch Vergleich von zyklisch erfassten Momentanwerten des Stroms, die durch mindestens eine halbe Netzperiode voneinander getrennt sind, festgestellt wird.

4. Verfahren nach Anspruch 1 oder einem der vorhergehenden Ansprüche, dadurch gekennzeichnet, dass Stromsprünge innerhalb eines gleitenden, weniger als eine Periode umfassenden Zeitfensters registriert werden und dass bei Feststellung mindestens zweier, innerhalb des Zeitfensters auftretender Stromsprünge die Weiterverarbeitung gesperrt wird.

5. Verfahren nach Anspruch 4, dadurch gekennzeichnet, dass der für eine Auslösung zulässige maximale Zeitverzug zwischen Fehlereintritt und Schwellenüberschreitung der Stromsumme kleiner als die Zeit eingestellt wird, in der ein Stromwandler bei Kurzschlussströmen gesättigt wird.

6. Verfahren nach Anspruch 2, dadurch gekennzeichnet, dass der Schwellenwert für die Änderungserkennung dynamisch der Betriebsstromgrösse vor Fehlereintritt nachgeführt wird.

7 Vorrichtung zur Durchführung des Verfahrens nach einem oder mehreren der vorhergegangenen Ansprüche, dadurch gekennzeichnet, dass die Sekundärseiten von mit Abzweigphasenleitern verbundenen Stromwandlern (5, 6, 7) über Abtast-und Halterschaltungen (11) und Analog/Digitalumsetzer (12) mit einem Mikrorechner (13) verbunden sind.

**FIG.1**

**FIG.2a**

**FIG.2b**

**FIG.2c**

EP 0 384 306 A1

FIG.3a $I_{ABG1}$

FIG.3b $I_{ABG2}$

FIG.3c $\Sigma I$ — $I_A >>>$, $I_A >>$, $t_1$, $t_4$, $>t_{linear}$

FIG.4a $i_{ABG}(t-1/2f_N)$

FIG.4b $i_{AGG}(t)$

FIG.4c $i_{ABG}(t)+i_{ABG}(t-1/2f_N)$ — DISA, $t_1$, $t_4$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0249215 (TOSHIBA)<br>* Seite 3, Zeilen 22 - 57 *<br>* Seite 6, Zeilen 7 - 11 *<br>* Seite 11 *<br>* Seite 12, Zeilen 10 - 22 *<br>* Anspruch 1; Figuren 1-17, 33 * | 1, 7 | H02H3/28 |
| Y | | 2-4, 6 | |
| | --- | | |
| Y | EP-A-0045105 (BBC)<br>* das ganze Dokument * | 2-4 | |
| | --- | | |
| Y | FR-A-2601524 (COMPAGNIE CONTINENTALE D'EQUIPEMENTS ELECTRIQUES)<br>* Seite 1, Zeilen 8 - 11 *<br>* Seite 2, Zeilen 15 - 21 *<br>* Anspruch 1 * | 6 | |
| | ----- | | |

**RECHERCHIERTE SACHGEBIETE (Int. Cl.5 )**

H02H

Der vorliegende Recherchenbericht wurde für alle Patentansprüche erstellt

| Recherchenort | Abschlußdatum der Recherche | Prüfer |
|---|---|---|
| DEN HAAG | 13 MAI 1990 | LIBBERECHT L.A. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes
   Dokument

EPO FORM 1503 03.82 (P0403)